# EUROPEAN PATENT SPECIFICATION

(11) **EP 1 359 715 B1**
(45) Date of publication and mention of the grant of the patent: **30.03.2005**
(21) Application number: 02253038.0
(22) Date of filing: 30.04.2002
(51) Int. Cl.: H04L 12/437

(54) **Method for establishing a loop-free path for transfer of data packets within a circular network**
Verfahren zum Aufbau eines schleifenfreien Pfades zur Übertragung von Datenpaketen in einem Ringnetz
Méthode pour l'établissement d'un chemin sans boucle pour le transfert de paquets dans un réseau à anneau

(43) Date of publication of application: 05.11.2003
(73) Proprietor: LUCENT TECHNOLOGIES INC., Murray Hill, New Jersey 07974-0636 (US)
(72) Inventor: De Heer, Arjan Johannes, 7552 KJ Hengelo Twente (NL); Malhotra, Richa, 7511 DG Enschede Twente (NL); De Man, Ronald, 2515 HC Den Haag (NL); Roijakkers, Sandra Aldegonda, 7559 JR Hengelo Twente (NL)
(74) Representative: Sarup, David Alexander

(56) References cited:
- US-A- 6 032 194

## Description

The invention is related to a method for establishing a loop-free path for transfer of data packets within a circular network upon a failure within the circular network, wherein the circular network comprises at least two bridges and at least two connections, wherein each connection is between two bridges, wherein each bridge has for each connection with another bridge an incoming and an outgoing port.

Such a method is known and comprises an optimisation process, such as one referred to as the Spanning Tree Protocol (STP) described in IEEE802.1D which is dedicated to Bridged Ethernet Networks.

A loop-free path is for instance necessary for a proper functioning of a Bridged Ethernet network. When loops occur in such an Ethernet network, undesired reception of a duplicate data packet may occur. Another problem is that in a series of data packets the sequence in which data packets arrive at a destination may be different from the sequence in which these data packets have been sent. These problems lead to malfunctioning of the transfer of data packets in a Bridged Ethernet network.

In this optimisation process each bridge is involved in a dynamic discovery of a loop-free subset of the circular network in which each bridge is connected. In this context, this loop-free subset of the circular network is also referred to as a Spanning Tree.

The optimisation process involves sending a number of messages from each bridge through the circular network to gather information with regard to path redundancy and a possibility of preventing undesired loops. Based on the information gathered a loop-free path is computed. Finally, the bridges are instructed to block or de-block incoming and/or outgoing ports in order to establish the loop-free path. The computation of the loop-free path may be influenced by factors such as speed and costs. If the number of messages involved in this optimisation process is large, delays may occur as a bridge can only process a limited number of messages per second. Also instability of the network may occur.

In general, a network can be used to carry multiple logically segregated networks. Each data packet comprises an identifier related to the logically segregated network the data packet belongs to. This virtual network may for instance only use a selected part of the available bandwidth on a network. A plurality of logically segregated networks may use mutually different parts of the available bandwidth. In Ethernet technology, such a logically segregated network is referred to as a Virtual Local Area Network (VLAN) and the identifier as a VLAN ID. VLANs and VLAN IDs are described in IEEE 802.1Q

A loop-free path within a circular network may be used by several Virtual Local Area Networks (VLAN), *i.e.* a group of VLANs. This implies that data packets of each VLAN use the same loop-free path. In other words, a connection which is not in this loop-free path is not at all used by the VLANs. In for instance the IEEE8O2. 1Q standard there is one loop-free path of the circular network, *i.e.* one Spanning Tree, for all VLANs. This results in a very unbalanced load on the network connections and inefficient use of the circular network resources.

Alternatively, there is a number of mutually different loop-free subsets of a circular network, wherein in each subset each bridge is connected. In that situation there are several different VLANs or different groups of VLANs. This situation is often referred to as Multiple Spanning Trees and is for instance decribed in the IEEE802.1s standard. This method of using the circular network aims to balance the load over the circular network. Based on the VLAN ID of a data packet a bridge decides as to whether its incoming and/or outgoing ports should be blocked or de-blocked for this particular data packet. If the incoming port should for instance be blocked, the bridge will regard the data packet as not received. If the incoming port should be de-blocked the bridge will, if possible, forward the data packet to its destination. When in such a situation a connection of the circular network suddenly fails the optimisation process is carried out for each VLAN or each group of VLANs, *i.e.* for each Spanning Tree. In other words, the known method comprises in that situation sending a very large number of messages through the network from each bridge to gather information with regards to the path redundancy and a possibility of preventing undesired loops.

As stated before, there is a limit on the number of messages a bridge can process per second. The above described situation may therefore lead to serious delays and sometimes even instability of the functioning of the circular network.

It is an object of the invention to provide a method for establishing a loop-free path within a circular network upon a failure of a connection within the circular network, wherein delays are minimised and wherein the functioning of the circular network is likely to remain stable.

It is known from United States Patent US-A-6032194 to provide a method for establishing a loop-free path for transfer of data packets within a circular network upon a failure within the circular network, wherein the circular network comprises at least two bridges and at least two connections. wherein each connection is between two bridges, wherein each bridge has for each connection with another bridge an incoming and an outgoing port, wherein the method comprises:
arranging from at least one of the bridges adjacent to a failing connection that the incoming and outgoing ports which are non-adjacent to the failing connection are de-blocked.

The present invention is characterised over the disclosure of US-A-603194 in that sending a message from at least one of the bridges adjacent to a failing connection to bridges which are non-adjacent to a failing connection, the message comprising an instruction to de-block the incoming and outgoing ports which are non-adjacent to the failing connection.

Advantageously, there is no need for all the bridges of the circular network to send messages related to gathering information with regard to the path redundancy and a possibility of preventing undesired loops. It is also unnecessary to compute a loop-free path. Only the bridges adjacent to the failing connection need to send a very small number of messages to establish the loop-free path. The number of messages needed to establish the loop-free path upon a failure in the circular network is minimised as compared to the method of the prior art. As a result, serious delays are avoided and the circular network is likely to remain stable.

In a preferred embodiment of the method according to the invention the method further comprises:
- arranging from at least one of the bridges adjacent to the failing connection that at least a set of two ports adjacent to the failing connection, are blocked.

In this embodiment, advantageously the loop-free path remains preserved when the failing connection is repaired.

The set of two ports may comprise the incoming port and the outgoing port of one bridge which is adjacent to the connection which is failing.

Alternatively, the set of two ports comprise the two outgoing ports which are adjacent to the connection which is failing so as to prevent for instance a data packet that is sent through the failing connection which has just been repaired to arrive at a bridge where also a duplicate has been sent to via the reverse direction in the circular network.

In another embodiment of the invention, the set of two ports comprise two incoming ports which are adjacent to the connection which is failing. If in this case the other ports which are adjacent to the failing connection remain de-blocked, data packets may still arrive at destinations which are directly connected to the failing connection.

In a further preferred embodiment of the method according to the invention the method further comprises establishing after a repair of the failing connection in a first time span a new loop-free path for a first logically segregated network and in a second time span a new loop-free path for a second logically segregated network, wherein the first time span and the second time span are mutually different.

The first and second logically segregated networks may also comprise a first group of logically segregated networks and a second group of logically segregated networks respectively.

The steps taken in this embodiment avoid for instance in the environment of Bridged Ethernet Networks the unfavourable situation wherein both the first VLAN or group of VLANs and the second VLAN or group of VLANs establish at the very same time a new loop-free path involving sending a large number of messages from each bridge through the circular network to gather information with regards to path redundancy and a possibility of preventing undesired loops. Herewith, the number of messages sent through the circular network per second, and received by the bridges, is reduced and as such possible delays can be avoided. Also the stability of the circular network can be maintained and computation of a loop-free path is not for both mutually different VLANs carried out at the same time. Finally, the number of messages from and to the bridges instructing to block or de-block incoming and/or outgoing ports in order to establish the loop-free path for the first VLAN or first group of VLANsand the second VLAN or second group of VLANs, are not all sent at the very same time, also preventing delay and instability of the circular network.

Preferably, the second time span succeeds the first time span therewith spreading the load of the necessary exchange of messages on the network. For this reason, with use of a large number of VLANs the method preferably comprises establishing successively for each VLAN a new loop-free path.

The invention is further illustrated by the following, non-limiting drawing. Herein show:
Figure 1a and 1b a schematic representation of a first embodiment of the method according to the invention; and
Figure 2a and 2b a schematic representation of a second embodiment of the method according to the invention.

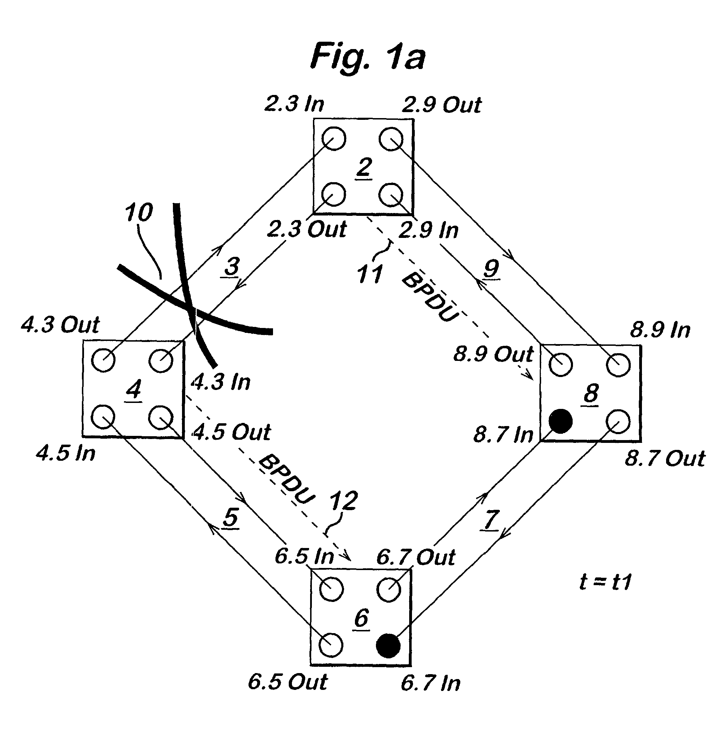

Figure 1a shows a circular network 1, four bridges 2,4,6,8, and four connections 3,5,7,9. A connection 3,5,7,9, is between two of the bridges 2,4,6,8. Bridge 2 has for the connection 3 with neighbouring bridge 4 an incoming port 2.3 ᵢₙ and an outgoing port 2.3 ₒᵤₜ. Bridge 2 has for the connection 9 with bridge 8 an incoming port 2.9 ᵢₙ and an outgoing port 2.9 ₒᵤₜ. Bridge 4 has for the connection 3 with bridge 2 an incoming port 4.3 ᵢₙ and an outgoing port 4.3 ₒᵤₜ. Bridge 4 has for the connection 5 with bridge 6 an incoming port 4.5 ᵢₙ and an outgoing port 4.5 ₒᵤₜ. Likewise, bridge 6 has for the connection 5 with bridge 4 an incoming port 6.5 ᵢₙ and an outgoing port 6.5 ₒᵤₜ. Bridge 6 has also for the connection 7 with bridge 8 an incoming port 6.7 ᵢₙ and an outgoing port 6.7 ₒᵤₜ. Finally, bridge 8 has for the connection 7 with bridge 6 an incoming port 8.7 ᵢₙ and an outgoing port 8.7 ₒᵤₜ. Bridge 8 has for the connection 9 with bridge 2 an incoming port 8.9 ᵢₙ and an outgoing port 8.9 ₒᵤₜ. The loop-free path is in this circular network 1 formed by blocking the incoming port 8.7 ᵢₙ and the incoming port 6.7 ᵢₙ. In other words, these incoming ports 8.7 ᵢₙ and 6.7 ᵢₙ
are not in use for the transfer of data packets and hence at none of the bridges data packets as forwarded by one of the bridges can arrive from both directions in the circular network, excluding the possibility of arrival of duplicate data packets. The loop-free path comprises bridge 6, connection 5, bridge 4, connection 3, bridge 2, connection 9 and bridge 8.

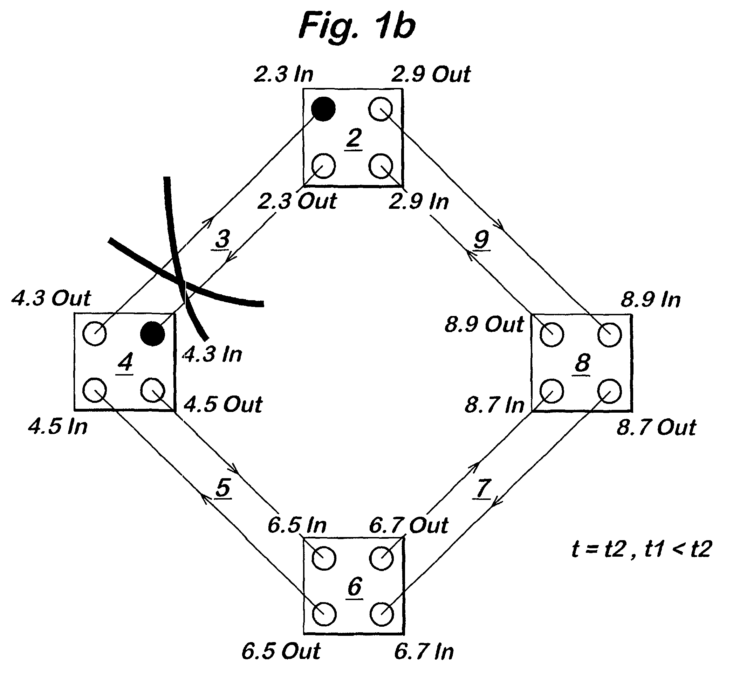

At a time t = t1 connection 3 fails as shown by cross 10. Upon the failure of connection 3, the bridges 2,4 which are both adjacent to the failing connection 3 send a message 11, 12 to the other bridges 6, 8 of the circular network 1. The message comprises an instruction to de-block all incoming ports which are not adjacent to the failing connection 3. The incoming port 6.7 ᵢₙ and 8.7 ᵢₙ are de-blocked as a result of the instruction. In addition to this, preferably the incoming ports 2.3 ᵢₙ and 4.3 ᵢₙ which are both adjacent to the failing connection 3, are blocked. In this example, all the outgoing ports are de-blocked for transfer of data packets and remain de-blocked upon the failure of a connection. The situation at t = t2 with t1 < t2 is shown in figure 1b. A new loop-free path is formed. This new loop-free path extends from bridge 4, via connection 5 ,bridge 6, connection 7, bridge 8 and connection 9 to bridge 2.

Although in this example both of the bridges 2,4 adjacent to the failing connection 3 send a message to the bridges 6,8 which are not adjacent to the failing connection 3, it is also possible that only one of the bridges 2,4 which is adjacent to the failing connection 3 sends a message to all the bridges within the circular network 1. This message, often referred to as a Bridge Protocol Data Unit (BPDU) may comprise an identification of the failing connection and an instruction to de-block, if necessary, all the incoming ports which are not adjacent to the failing connection 3.

It is also possible that in a circular network 1 a loop-free is established by blocking the outgoing ports adjacent to a particular connection instead of, or in addition to, blocking the incoming ports. The messages may then accordingly comprise instructions to de-block the outgoing ports which are non-adjacent to the failing connection, instead of, or in addition to, de-blocking the incoming ports which are non-adjacent to the failing connection.

In this case, preferably the outgoing ports which are adjacent to the failing connection, instead of, or in addition to, the incoming ports which are adjacent to the failing connection are blocked to obtain a loop-free path just after repair of the failing connection 3.

Alternatively, it is possible to establish a loop-free path in a circular network by blocking the incoming port and the outgoing port of only one of the bridges. In that case, upon a failure of one of the connections, both the incoming ports and the outgoing ports which are non-adjacent to the failing connection will be de-blocked. Preferably, in that situation the incoming and outgoing port adjacent to the failing connection and belonging to one bridge may be blocked to obtain a loop-free path just after repair of the failing connection 3.

Instead of one message which is forwarded by the bridges it is also possible that the bridge adjacent to the failing connection 3 sends an individual message to each of the other bridges within the circular network 1.

It is even conceivable that one of the bridges adjacent to the failing connection sends a message to only those bridges which have to de-block one or more of their ports to obtain the desired subset of the circular network.

As a minimum the circular network comprises two bridges and two connections. The circular network may however comprise many more bridges and connections. Each bridge may also be connected to final destinations which are not part of the circular network. In practice, the data packets will comprise a address destination address based on which a bridge decides into which direction the data packet has to be further transferred.

Circular networks may be used by a number of Virtual Local Area Networks (VLANs) which all share the same loop-free path.

However, it is also possible that each VLAN or group of VLANs has its own loop-free path on the circular network. In that case, for each VLAN or group of VLANs a different set of at least two ports is blocked to establish a loop-free path. Each data packet needs then to comprise information on the particular VLAN it is using. The bridges are capable of extracting this information from a data packet.

Based on this information the bridges either discard a datapacket or forward a datapacket.

If a number of different VLANs or groups of VLANs is active on a circular network, it is not necessary that one or both of the bridges adjacent to the failing connection send a message for each VLAN or each VLAN group with an instruction that all the incoming and or outgoing ports need to be de-blocked. One message may equally apply to all bridges which are non-adjacent to the failing connection, irrespective of the VLAN or group of VLANs.

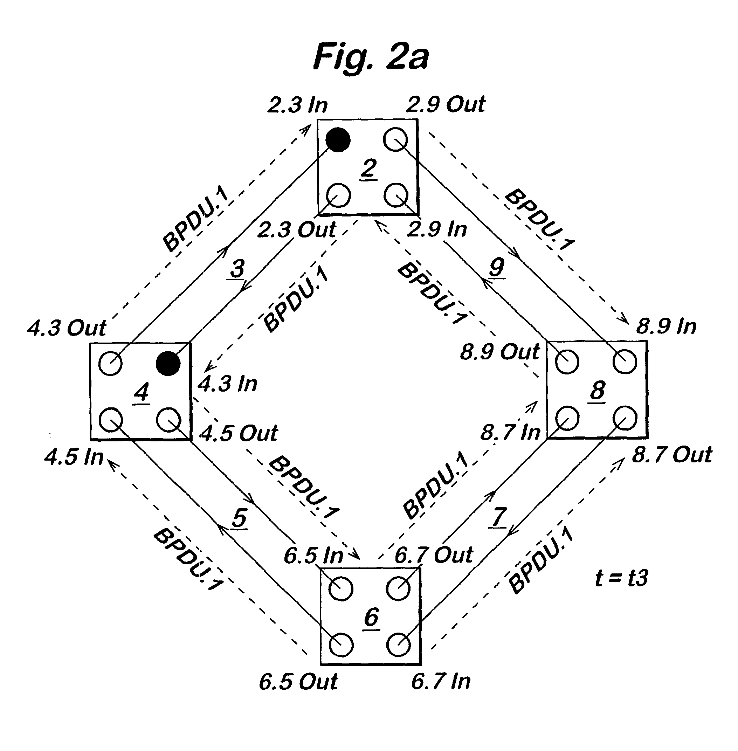

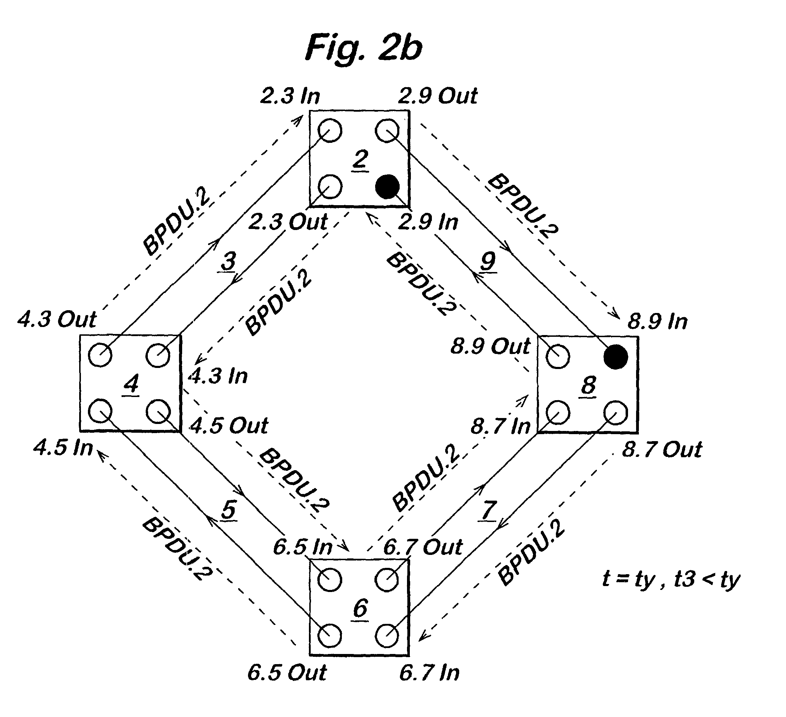

A further preferred embodiment of the method according to the invention is schematically indicated in figure 2a and 2b. In figure 2a a circular network 1 is shown. Although not visible in Fig. 2a, a number of different VLANs is applied on this circular network. The situation is shown at t = t3, wherein t3 is after t2. Connection 3 is the connection which had previously been failing but has at t = t3 been repaired. All the incoming and outgoing ports which are not adjacent to the connection 3 are de-blocked. According to one of the preferred embodiments of the method the incoming port 2.3 ᵢₙ and the incoming port 4.3 ᵢₙ which are both adjacent to the connection 3, are blocked to obtain a loop-free path for all VLANs applied on this circular network 1. In this situation each VLAN and each VLAN group uses the very same subset of the circular network. This causes unbalanced load of the circular network and inefficient use of the circular network.

To overcome this undesired situation the optimisation process is started up. First, in a first time span the optimisation process is carried out for a first VLAN or group of VLANs. Hereto, messages in the drawing referred to as BPDU 1 are sent from the bridges around the circular network to gather information with regard to path redundancy and a possibility of preventing undesired loops. Based on the information gathered a loop-free path is computed. Finally, the bridges are instructed to block or de-block incoming and/or outgoing ports in order to establish a loop-free path for the first VLAN or first group of VLANs. The computation of the loop-free path may be influenced by factors such as speed and costs. In this case, in a first time span the incoming port 2.9 ᵢₙ and incoming port 8.9 ᵢₙ are blocked and all other incoming ports of the circular network are de-blocked to establish a new loop-free path for the first VLAN or first group of VLANs. This leads to a new situation at time t =t4 wherein t4 is after t3 as shown in Fig. 2b.

In a second time span the optimisation process is carried out for a second VLAN or second group of VLANs. Hereto, messages in the drawing referred to as BPDU 2 are sent from the bridges around the circular network to gather information with regard to path redundancy and a possibility of preventing undesired loops. Based on the information gathered another new loop-free path is computed. Finally, the bridges are instructed to block or de-block incoming and/or outgoing ports for data transfer the second VLAN or second group of VLANs, therewith establishing the second new loop-free path.

Preferably the second new loop-free path for the second VLAN or second group of VLANs is established after establishment of the first new loop-free path for the first VLAN or first group of VLANs.

With a large number of mutually different VLANs or group of VLANs on the circular network, a new loop-free path is successively established for each VLAN or group of VLANs.

The part of the method as explained by referring to Figure 2a en 2b, *i.e.* dealing with the situation just after repair of a failing connection, may in general be applied from that situation, irrespective of what response took place upon the failure of a connection

Bridges may also be referred to as switches. Those skilled in the art will be able to apply all sort of variations on the method according to the invention and/or implement this method in existing methods of the prior art.
Although in the example a circular network comprises four bridges, it is possible that a circular network comprises two bridges. The examples further describe the application of VLANs. However, it is also conceivable that instead of VLANs other types of logically segregated networks are applied. Likewise, it is possible that the invention is applicable in all networks which are different from Bridged Ethernet Networks.

All these variations and implementations are considered to be a method according to the invention as defined in the appended claims.

## Claims

1. Method for establishing a loop-free path for transfer of data packets within a circular network (1) upon a failure (10) within the circular network, wherein the circular network comprises at least two bridges (2,4,6,8) and at least two connections (3,5,7,9), wherein each connection is between two bridges, wherein each bridge has for each connection with another bridge an incoming and an outgoing port, wherein the method comprises:
arranging from at least one of the bridges (2,4) adjacent to a failing connection (3) that the incoming (6.7 in, 8.7 in) and outgoing ports which are non-adjacent to the failing connection are de-blocked **characterised by** sending a message (11,12) from at least one of the bridges (2,4) adjacent to a failing connection (3) to bridges (6,8) which are non-adjacent to a failing connection (3), the message (11, 12) comprising an instruction to de-block the incoming (6.7 in, 8.7 in) and outgoing ports which are non-adjacent to the failing connection (3).

2. Method according to claim 1, **characterised in that**, the method further comprises:
arranging from at least one of the bridges adjacent to the failing connection that at least a set of two ports (2.3 in, 4.3 in) adjacent to the failing connection, are blocked.

3. Method according to claim 2, **characterised in that**, the two ports comprise the incoming port and the outgoing port of one bridge.

4. Method according to claim 2, **characterised in that**, the two ports comprise two outgoing ports.

5. Method according to claim 2, **characterised in that** the two ports comprise two incoming ports (2.3 in, 4.3 in).

6. Method according to any one of the previous claims, **characterised in that**, the method further comprises establishing after a repair of the failing connection in a first time span a new loop-free path for a first logically segregated network and in a second time span a new loop-free path for a second logically segregated network, wherein the first time span and the second time span are mutually different.

7. Method according to claim 6, **characterised in that** the second time span succeeds the first time span.

8. Method according to claim 6 or 7, **characterised in that**, the method comprises: establishing successively for each logically segregated network or group of logically segregated networks a new loop-free path.

9. Method according to claim 7 or 8, **characterized in that**, each logically segregated network is a Virtual Local Area Network (VLAN).

## Patentansprüche

1. Verfahren zum Aufbau eines schleifenfreien Pfades zur Übertragung von Datenpaketen in einem Ringnetz (1) bei einem Ausfall (10) innerhalb des Ringnetzes, wobei das Ringnetz mindestens zwei Brücken (2, 4, 6, 8) und mindestens zwei Verbindungen (3, 5, 7, 9) umfaßt, wobei jede Verbindung zwischen zwei Brücken besteht, wobei jede Brücke für jede Verbindung mit einer anderen Brücke einen ankommenden und einen abgehenden Anschluß aufweist, mit folgenden Schritten:
Anordnen von mindestens einer der Brücken (2, 4) neben einer ausfallenden Verbindung (3), daß die ankommenden (6.7 in, 8.7 in) und abgehenden Anschlüsse, die nicht neben der ausfallenden Verbindung liegen, entblockt werden, **gekennzeichnet durch** Senden einer Nachricht (11, 12) von mindestens einer der Brücken (2, 4) neben einer ausfallenden Verbindung (3) zu Brücken (6, 8), die nicht neben einer ausfallenden Verbindung (3) liegen, wobei die Nachricht (11, 12) eine Anweisung zum Entblocken der ankommenden (6.7 in, 8.7 in) und abgehenden Anschlüsse, die nicht neben der ausfallenden Verbindung (3) liegen, umfaßt.

2. Verfahren nach Anspruch 1, **dadurch gekennzeichnet, daß** das Verfahren weiterhin folgendes umfaßt:
Anordnen von mindestens einer der Brücken neben der ausfallenden Verbindung, daß mindestens eine Menge von zwei Anschlüssen (2.3 in, 4.3 in) neben der ausfallenden Verbindung blockiert wird.

3. Verfahren nach Anspruch 2, **dadurch gekennzeichnet, daß** die zwei Anschlüsse den ankommenden Anschluß und den abgehenden Anschluß einer Brücke umfassen.

4. Verfahren nach Anspruch 2, **dadurch gekennzeichnet, daß** die zwei Anschlüsse zwei abgehende Anschlüsse umfassen.

5. Verfahren nach Anspruch 2, **dadurch gekennzeichnet, daß** die zwei Anschlüsse zwei ankommende Anschlüsse (2.3 in, 4.3 in) umfassen.

6. Verfahren nach einem der vorhergehenden Ansprüche, **dadurch gekennzeichnet, daß** das Verfahren weiterhin das Aufbauen nach einer Reparatur der ausfallenden Verbindung in einem ersten Zeitraum eines neuen schleifenfreien Pfades für ein erstes logisch getrenntes Netz und in einem zweiten Zeitraum eines neuen schleifenfreien Pfades für ein zweites logisch getrenntes Netz umfaßt, wobei sich der erste Zeitraum und der zweite Zeitraum voneinander unterscheiden.

7. Verfahren nach Anspruch 6, **dadurch gekennzeichnet, daß** der zweite Zeitraum dem ersten Zeitraum folgt.

8. Verfahren nach Anspruch 6 oder 7, **dadurch gekennzeichnet, daß** das Verfahren folgendes umfaßt:
Herstellen eines neuen schleifenfreien Pfades nacheinander für jedes logisch getrennte Netz oder jede Gruppe von logisch getrennten Netzen.

9. Verfahren nach Anspruch 7 oder 8, **dadurch gekennzeichnet, daß** jedes logisch getrennte Netz ein virtuelles Ortsnetz (VLAN - virtual Local Area Network) ist.

## Revendications

1. Procédé pour établir un chemin sans boucle pour le transfert de paquets de données dans un réseau circulaire (1) dès une défaillance (10) dans le réseau circulaire, dans lequel le réseau circulaire comprend au moins deux ponts (2, 4, 6, 8) et au moins deux connexions (3, 5, 7, 9), dans lequel chaque connexion est entre deux ponts, dans lequel chaque pont a pour chaque connexion avec un autre pont un port d'arrivée et un port de départ, dans lequel le procédé comprend :
l'agencement d'au moins un des ponts (2, 4) adjacents à une connexion défaillante (3) dont les ports d'arrivée (arrivée 6.7, arrivée 8.7) et de départ qui sont non adjacents à la connexion défaillante sont dégroupés **caractérisé par** l'envoi d'un message (11, 12) d'au moins un des ponts (2, 4) adjacents à une connexion défaillante (3) aux ponts (6, 8) qui sont non adjacents à une connexion défaillante (3), le message (11, 12) comprenant une instruction pour dégrouper les ports d'arrivée (arrivée 6.7, arrivée 8.7) et de départ qui sont non adjacents à la connexion défaillante (3).

2. Procédé selon la revendication 1, **caractérisé en ce que** le procédé comprend en outre :
l'agencement d'au moins un des ponts adjacents à la connexion défaillante dont au moins un ensemble de deux ports (arrivée 2.3, arrivée 4.3) adjacents à la connexion défaillante, sont groupés.

3. Procédé selon la revendication 2, **caractérisé en ce que** les deux ports comprennent le port d'arrivée et le port de départ d'un pont.

4. Procédé selon la revendication 2, **caractérisé en ce que** les deux ports comprennent deux ports de départ.

5. Procédé selon la revendication 2, **caractérisé en ce que** les deux ports comprennent deux ports d'arrivée (arrivée 2.3, arrivée 4.3).

6. Procédé selon l'une quelconque des revendications précédentes, **caractérisé en ce que** le procédé comprend en outre l'établissement après une réparation de la connexion défaillante dans un premier espace de temps d'un nouveau chemin sans boucle pour un premier réseau séparé logiquement et dans un second espace de temps d'un nouveau chemin sans boucle pour un second réseau séparé logiquement, dans lequel le premier espace de temps et le second espace de temps sont mutuellement différents.

7. Procédé selon la revendication 6, **caractérisé en ce que** le second espace de temps succède au premier espace de temps.

8. Procédé selon la revendication 6 ou 7, **caractérisé en ce que** le procédé comprend :
l'établissement successivement pour chaque réseau séparé logiquement ou groupe de réseaux séparés logiquement d'un nouveau chemin sans boucle.

9. Procédé selon la revendication 7 ou 8, **caractérisé en ce que** chaque réseau séparé logiquement est un réseau local virtuel (VLAN).
